(11) **EP 0 700 817 B1**

(12) **EUROPEAN PATENT SPECIFICATION**

(45) Date of publication and mention
of the grant of the patent:
**17.05.2000 Bulletin 2000/20**

(51) Int Cl.⁷: **B61B 13/00**, B62D 1/26

(21) Application number: **95113688.6**

(22) Date of filing: **31.08.1995**

(54) **System for the urban transportation of passengers**

System für den städtischen Transport von Passagieren

Système pour le transport urbain de passagers

(84) Designated Contracting States:
**DE ES FR GB IT**

(30) Priority: **06.09.1994 IT PA940009**

(43) Date of publication of application:
**13.03.1996 Bulletin 1996/11**

(73) Proprietor: **Purpura, Rosario**
**95145 Palermo (IT)**

(72) Inventor: **Purpura, Rosario**
**95145 Palermo (IT)**

(74) Representative: **Modiano, Guido, Dr.-Ing. et al**
**Modiano & Associati SpA**
**Via Meravigli, 16**
**20123 Milano (IT)**

(56) References cited:
**EP-A- 0 465 411          BE-A- 654 679**
**FR-A- 861 207           FR-A- 2 403 254**
**US-A- 4 057 019**

**Description**

The present invention relates to a system for the urban transportation of passengers, according to FR-A-861.207.

The object of the invention is to provide a track system known from FR-A-861.207 with a confinement guiding system which allows an effective steering in narrow curves.

This object is achieved with the confinement guiding device according to claim 1.

Further characteristics and advantages will become apparent from the description of a preferred but not exclusive embodiment of the invention, illustrated only by way of non-limitative example in the accompanying drawings, wherein:

figure 1 is a lateral elevation view of a vehicle according to the invention;
figure 2 is a front elevation view of a vehicle according to the invention;
figure 3 is a sectional front elevation view of a tunnel according to the invention;
figure 4 is a sectional front elevation view of a tunnel and of a station;
figure 5 is a sectional front elevation view of a tunnel according to another aspect of the invention;
figure 6 is a sectional front elevation view of a tunnel and of a station according to another aspect of the invention;

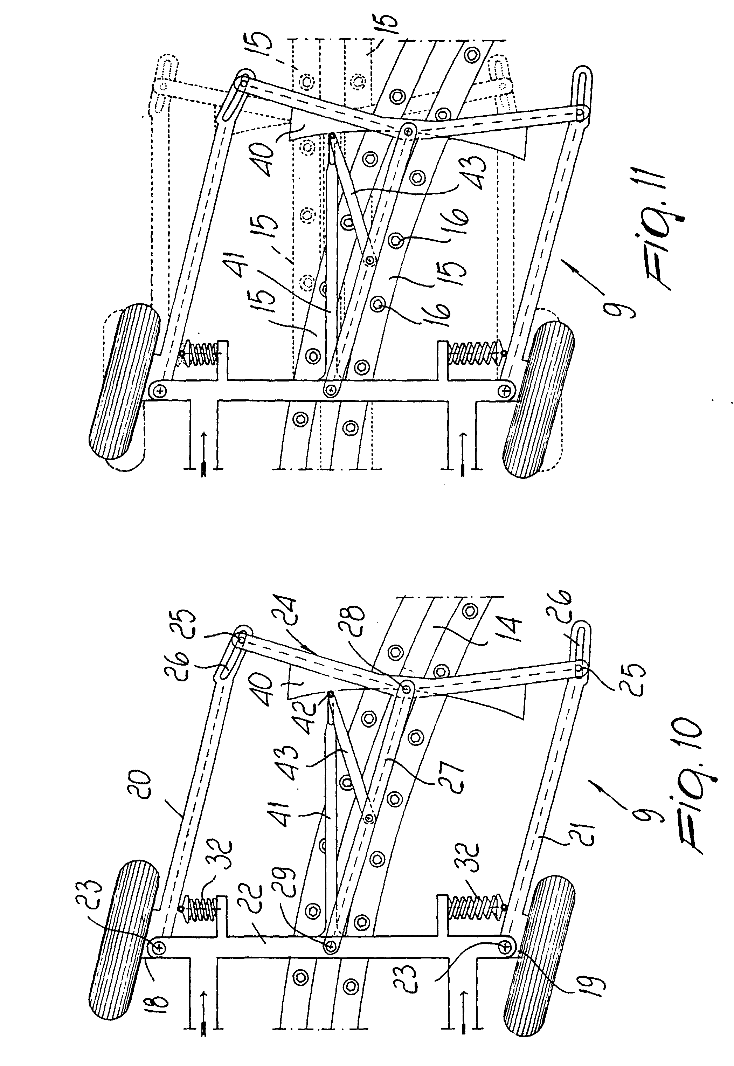

figure 6bis is a sectional front elevation view of two parallel tunnels;
figure 7 is a diagram of the steering and guiding system of the vehicle according to the invention;
figure 8 is a schematic plan view of the steering system of the vehicle;
figure 9 is another schematic plan view of the steering system of the vehicle;
figure 10 is another schematic plan view of the steering system of the vehicle, during a curve;

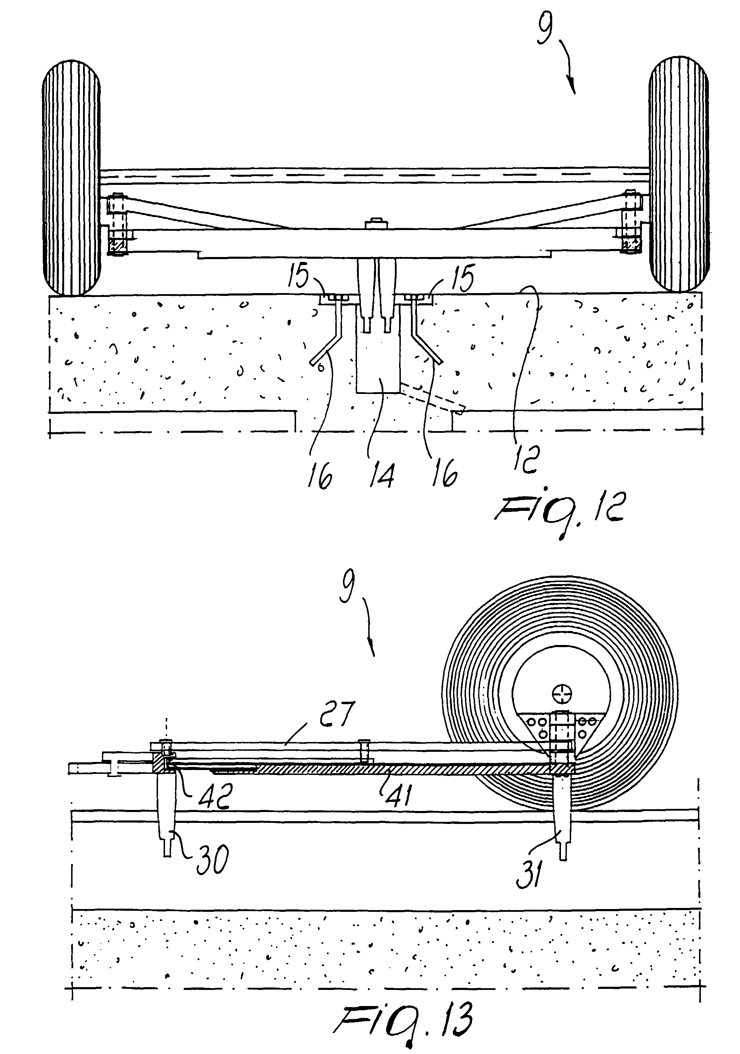

figure 11 is another schematic plan view of the steering system of the vehicle, during a curve;
figure 12 is a front elevation view of the steering system of the vehicle;
figure 13 is a lateral elevation view of the steering system of the vehicle;
figure 14 is an enlarged-scale plan view of a detail of the steering system;

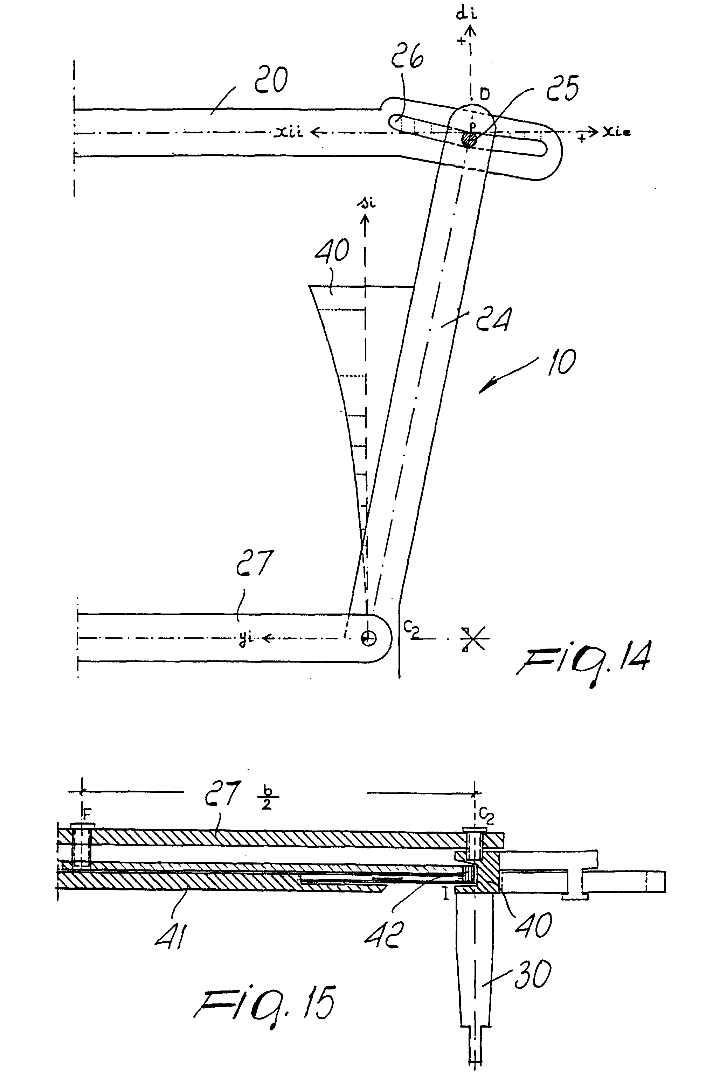

figure 15 is an enlarged-scale lateral elevation view of a detail of the steering system;

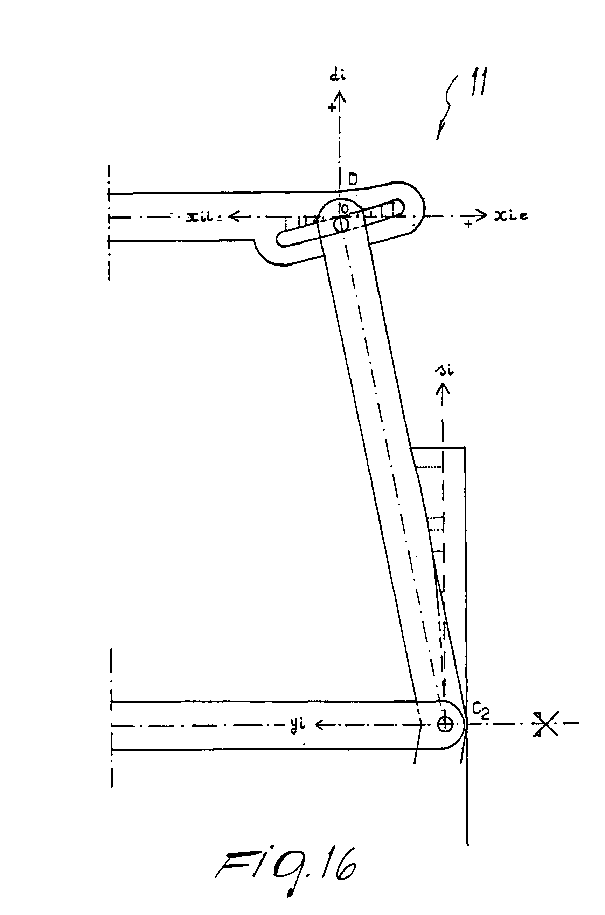

figure 16 is another enlarged-scale plan view of a detail of the steering system;

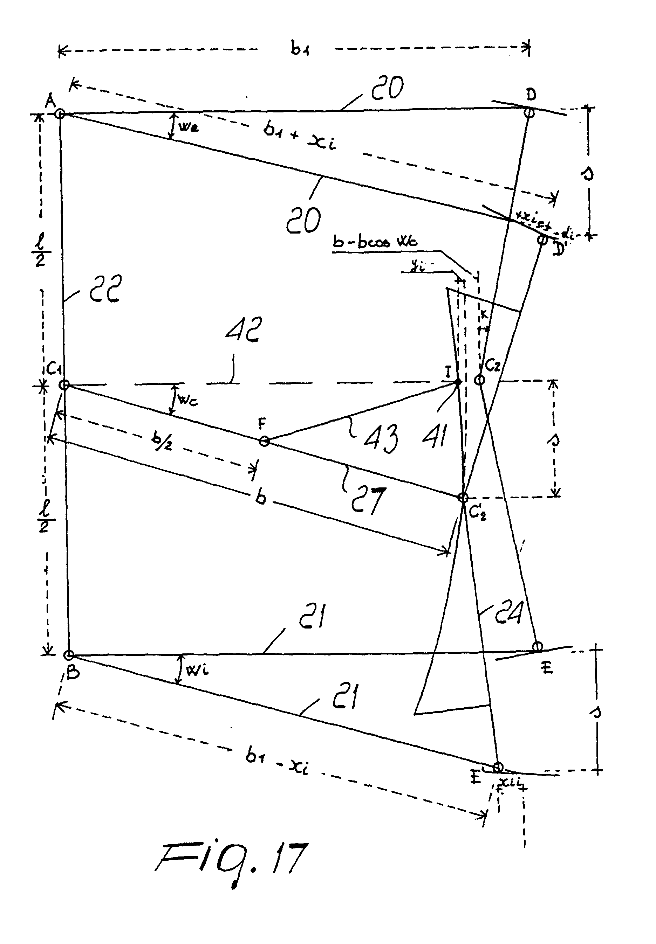

figure 17 is a diagram of the operation of the steering system;

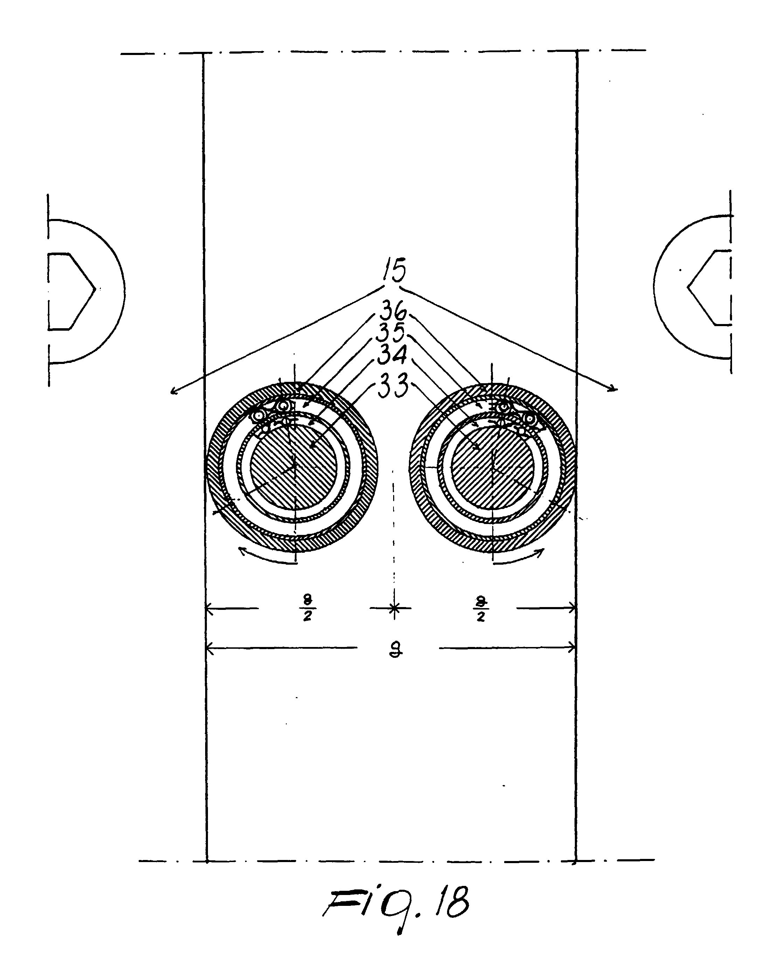

figure 18 is a sectional plan view of the guiding rollers;

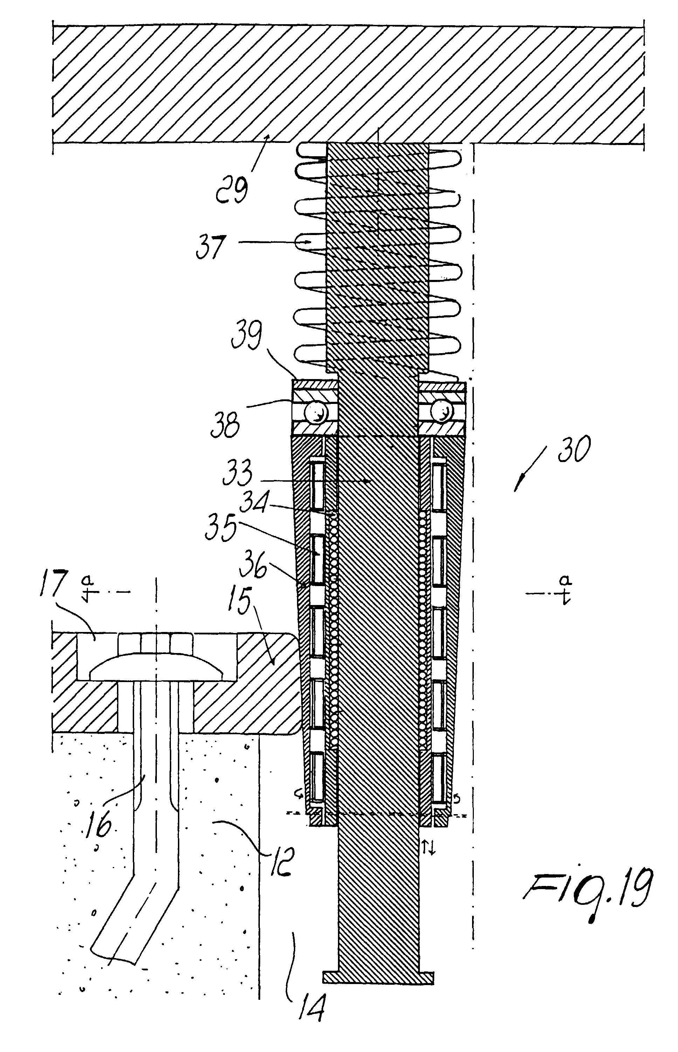

figure 19 is a sectional front elevation view of a roller that engages a guide;

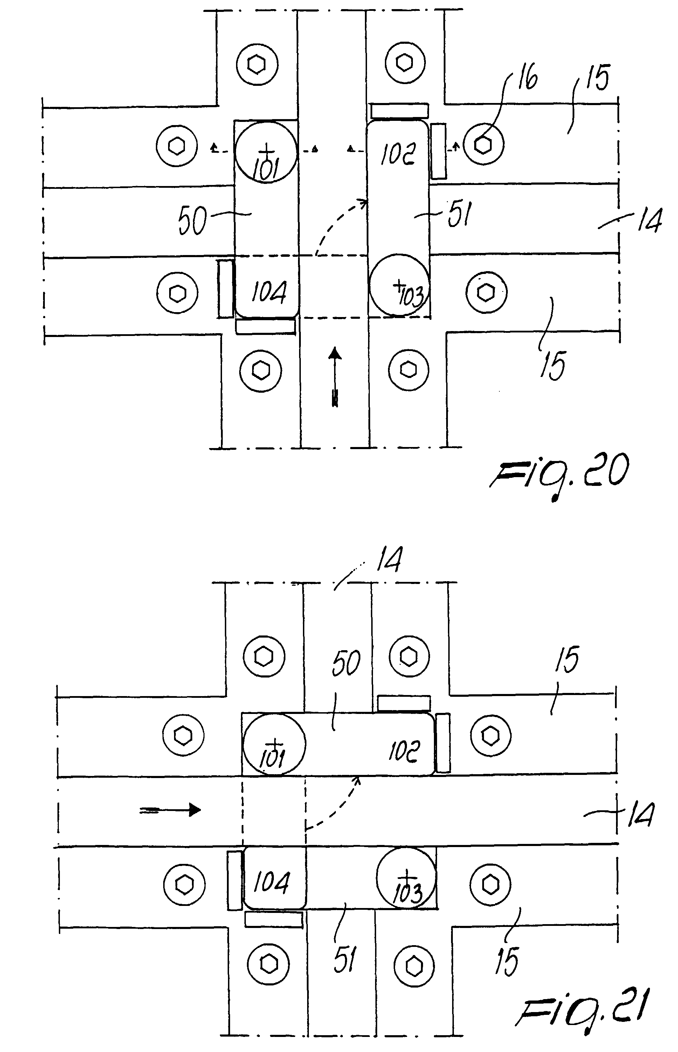

figure 20 is a diagram of an intersection of a track;

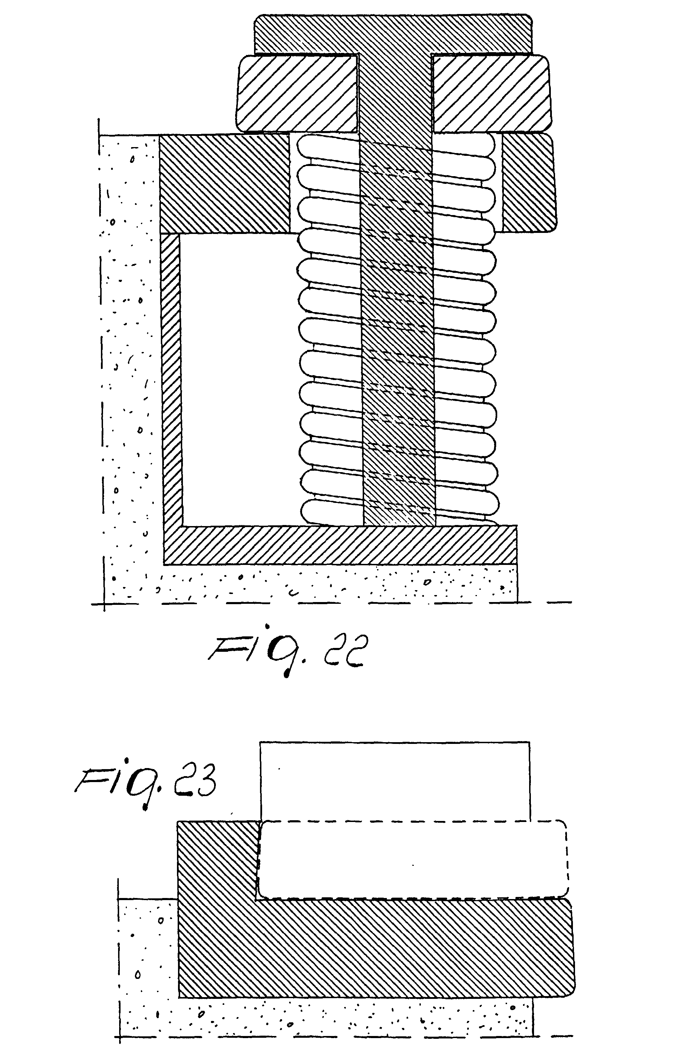

figure 21 is a view that is similar to the preceding one but shows the intersection in the opposite position;

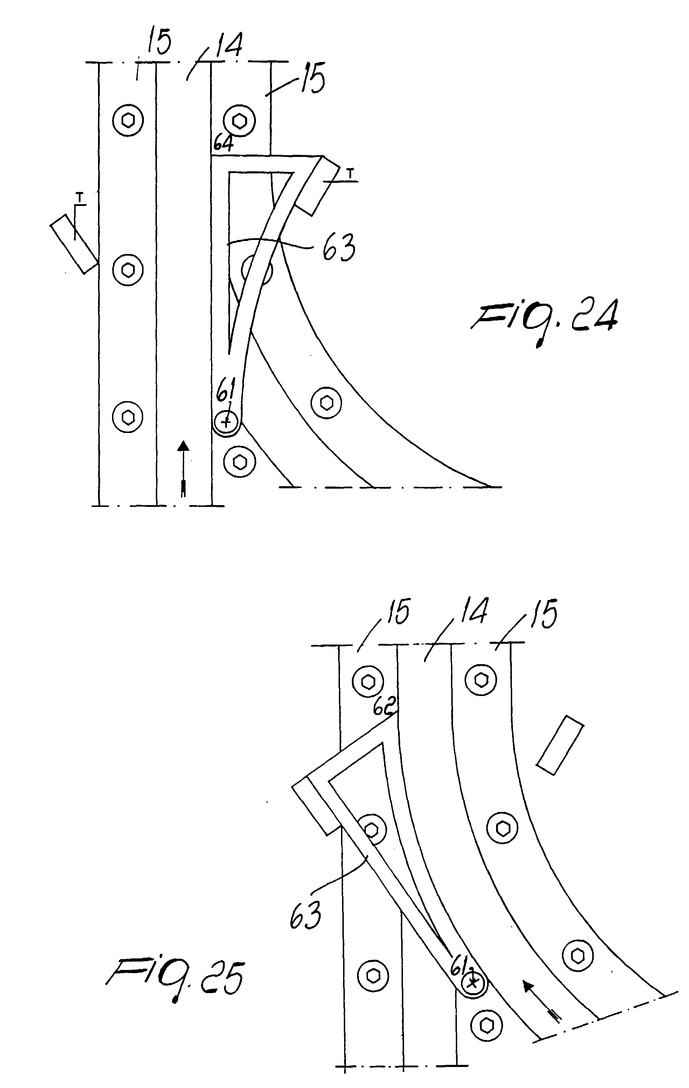

figure 22 is a sectional enlarged-scale lateral elevation view of a detail of the track;
figure 23 is another detail view;

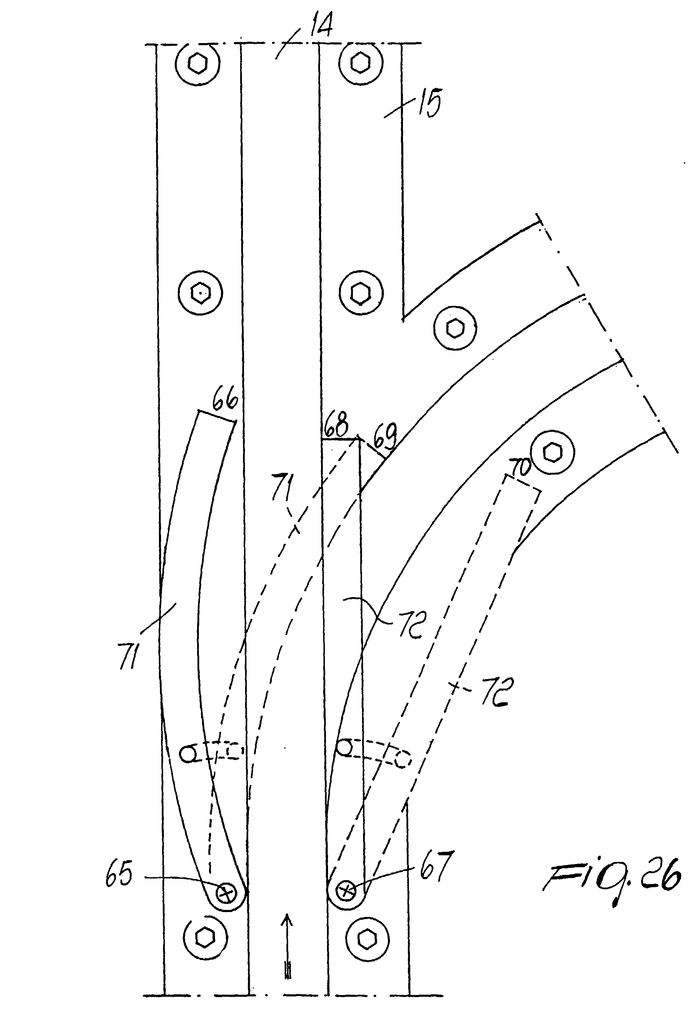

figure 24 is an enlarged-scale view of a detail of an intersection of the track along a curve;
figure 25 is a view that is similar to the preceding one but shows the reverse intersection position;

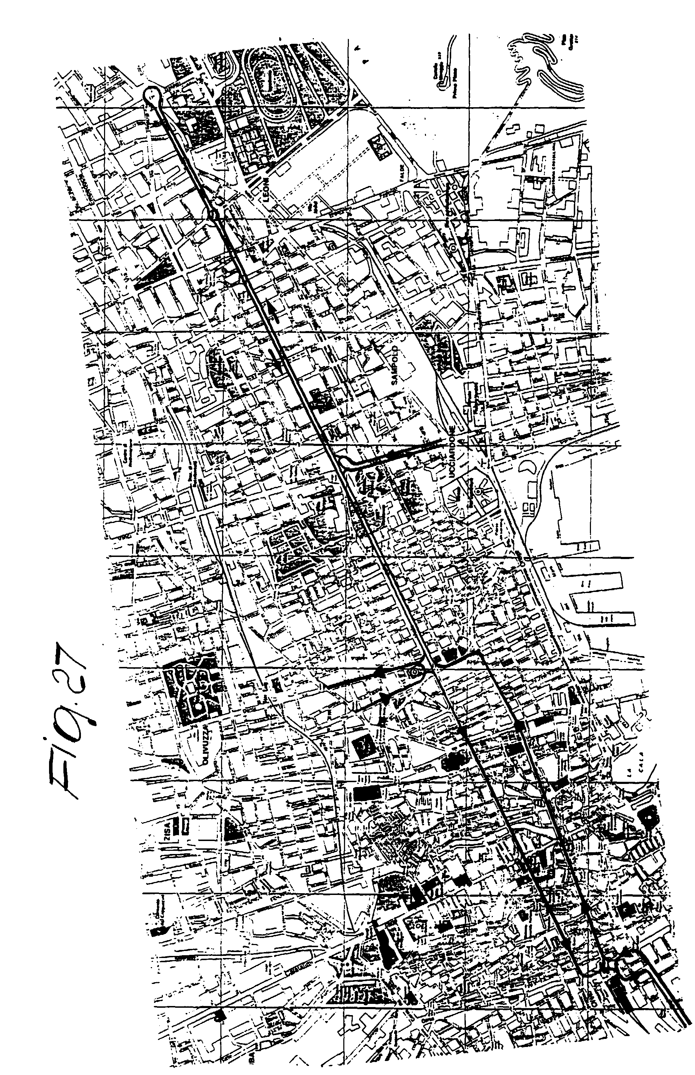

figure 26 is another detail view of an intersection;
figure 27 is a map of a city center, illustrating a possible route of the transportation system.

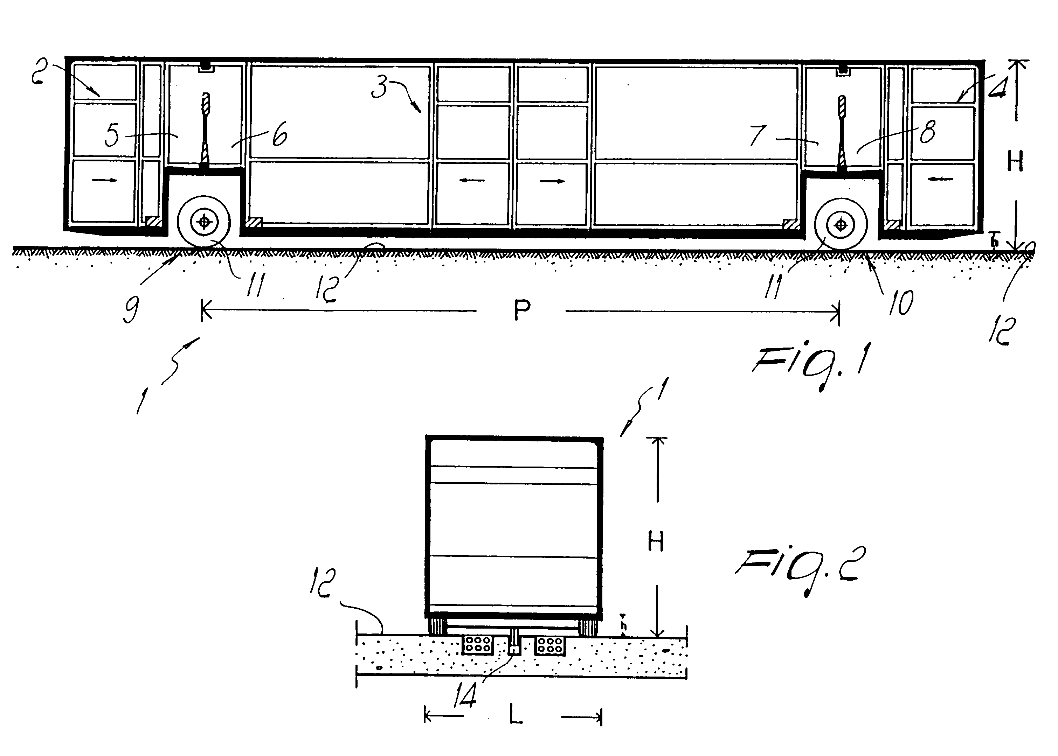

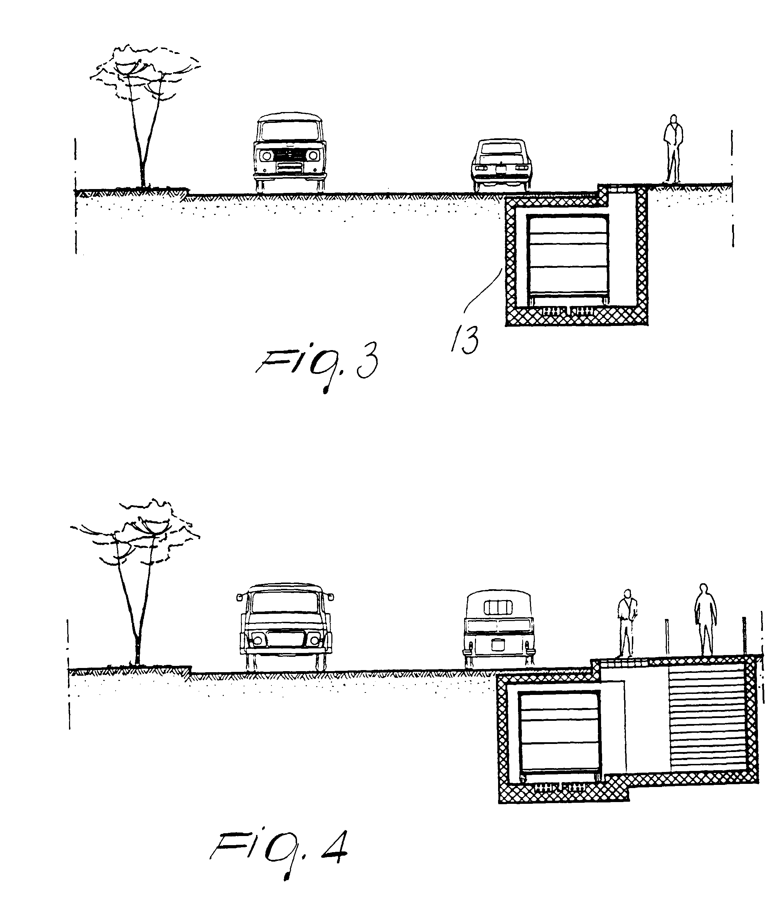

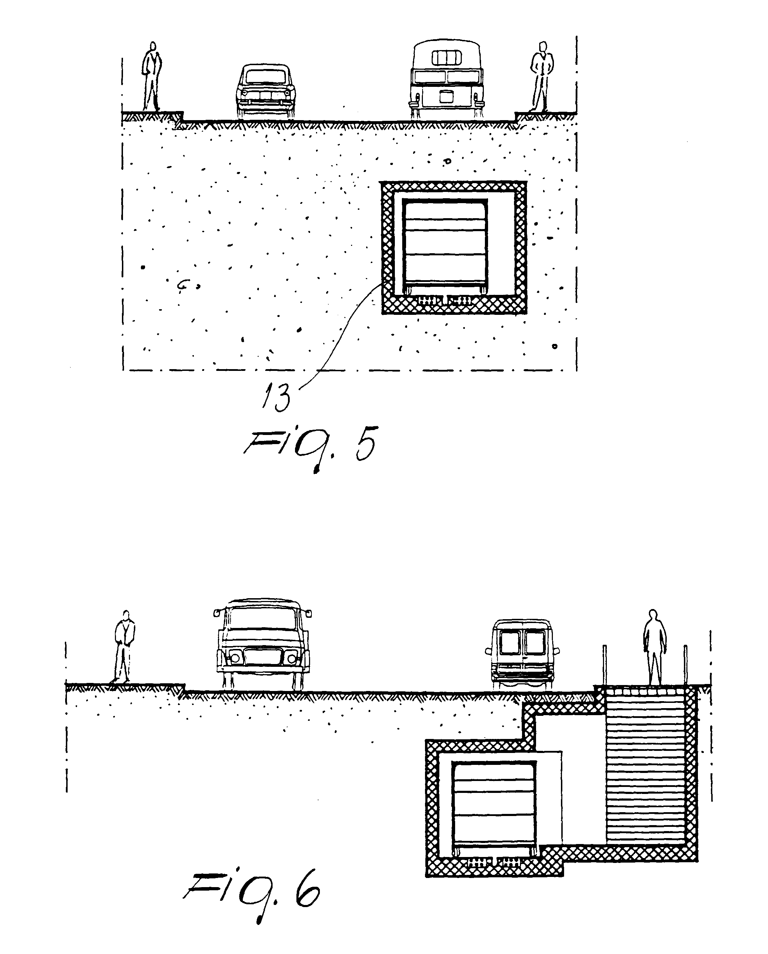

With particular reference to figures 1 and 2, the vehicle, generally designated by the reference numeral 1, preferably has the following characteristics according to the invention:

-- length = 11.00 m
-- maximum width L = 2.10 m
-- maximum height from track surface H = 2.35 m
-- height of floor from track surface h = 0.25 m
-- center distance between the two axles P = 7.75 m

The vehicle is preferably divided into compartments 2, 3, and 4 that are not interconnected and can be accessed from outside by means of doors that open automatically by moving outward and sliding.

The vehicle can have seats and standing room or only seats. In the vehicle provided only with seats, the compartments are identical: each one has eight seats arranged in two facing rows separated by an aisle. In the other case, the vehicle has only two pairs of oppositely arranged rows of seats 5, 6 and 7, 8 and the remaining parts are meant for standing passengers.

In this latter case, which constitutes the typical vehicle shown in cross-section in figures 1 and 2, the vehicle is divided into three compartments 2, 3, and 4 that are not interconnected, and has sixteen seats and standing room for one hundred and ten passengers, assuming a maximum density of six passengers per square meter of surface.

The electrically-propelled vehicle, supplied with power by the track, has two steering and driving axles 9 and 10 that have wheels fitted with tires that have a diameter of 60 cm. The axles 9 and 10, the motors, and the wheels 11 are accommodated in the spaces between the track surface 12 and the two oppositely arranged rows of seats 5, 6, 7, and 8 (figure 1).

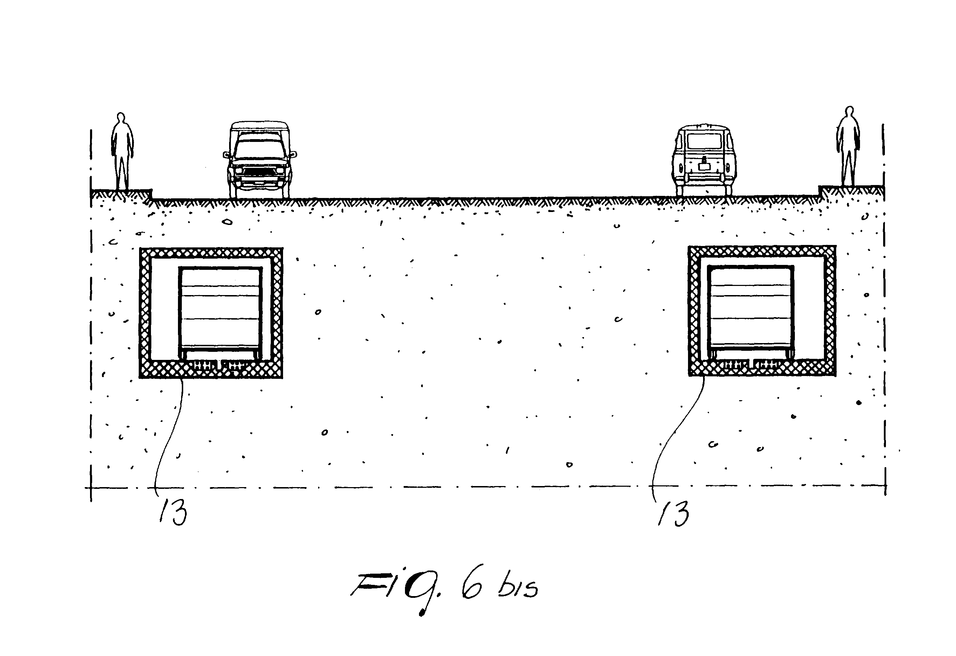

The track surface 12, which can be at ground level (figure 2) or in a tunnel 13 (figures 3 and 5), has a minimum width of 3.00 m along straight sections, is made of concrete, and is covered, in the rolling bands, by an epoxy surface layer to improve grip and provide a quieter ride (figure 2).

A slot 14 made of reinforced concrete is formed along the longitudinal axis of the track, has a rectangular cross-section, and is 11 cm wide and 25 cm deep. Two continuous metallic guides 15 are fixed along the two upper edges of the slot by means of steel pins 16 that are threaded in their upper part, are 25 cm apart, and are anchored in the reinforced concrete that constitutes the central part of the track; said guides have a trapezoidal transverse cross-section, with a bottom parallel side that is 10 cm long, a top parallel side that is 9.90 cm long, and a height of 2.5 cm. The guides that are fixed to the pins, which are anchored in the concrete with appropriate nuts, must have a constant spacing of 9 cm between the two top edges. In order to maintain this spacing, the holes 17 of the guides for fixing to the pins are oval and allow to constantly adjust the spacing (figure 19). The longitudinal axis of the track coincides with the longitudinal axis of the slot, and the geometric components of the track must be referred to this axis.

Each axle 9 and 10 of the vehicle can steer by means of the following mechanism. With reference to figures 8, 9, 12, and 13, the two steel bars 20 and 21, whose length is "b1", are rigidly connected, in a parallel arrangement, to two steel plates 18 and 19 that are welded to the axes of the two wheels 11 in the inner part. The two wheels 11 and the two bars 20 and 21 are connected to the ends of the steel bar 22, which is rigidly welded to the chassis of the vehicle, by means of two vertical pivots 23 that allow the rotation of the two bars together with the two wheels on a horizontal plane about the vertical axis of the pivot for pivoting to the fixed bar 22. At their free ends, the two bars 20 and 21 are connected to the metallic bar 24 by means of two vertical pivots 25 that are fixed to the bar 24 and can slide in suitable slots 26 that are formed at the ends of the two bars 20 and 21. The bars 22 and 24 are connected in the respective centerline points by the steel bar 27, whose length is "b", by means of two vertical pivots 28 and 29 that constitute hinges that allow rotation on the horizontal plane. Two pairs of independent guiding rollers 30 and 31 are fixed at the center of each one of the two bars 22 and 24 on a steel plate 24; the rollers of each pair are mutually spaced by 0.5 cm. The plate that supports the two guiding rollers is advantageously connected to the bar by means of two hinges (not shown), which under the action of a hydraulic mechanism allow said plate to rotate about the axis of the two bars 22 and 24 through 90°, arranging the guiding rollers in a horizontal position, i.e., outside the track guides. Two springs 32 act on the two bars 20 and 21 by contrast against the bar 22, which is fixed to the chassis; the size of said springs is such that the guiding mechanism, which is rigid and fixed on a vertical plane, offers appropriate resistance to variations in the configuration of the articulated quadrilateral on the horizontal plane, so as to produce a self-centering of the guiding rollers within the fixed track guides during straight-line motion.

With particular reference to figures 18 and 19, each guiding roller is constituted as follows:

a solid cylindrical element 33 made of steel, which has a diameter of 2 cm, a length of 30 cm, and is rigidly associated with the steel plate 29;
a bushing 34 with ball bearings to allow the vertical sliding, along the solid cylindrical element 33, of roller bearings 35 and of the entire rotating part of the guiding roller; the roller bearings 35 have internal rings that are fixed to the bush 34 and external rings that are fixed to a hollow element 36 to allow rotation of the hollow element about the solid element;
the hollow element 36, which is made of steel, has a circular cross-section, is fixed to the external rings of the bearings 35, can rotate freely about the fixed cylindrical element 33, and has a cylindrical internal surface and a conical external surface that has a 4% taper, which is equal to the taper of the contact edge of the metallic guide 15.

The hollow cylindrical element is 15 cm high and its external diameters are 3.30 cm at the base and 4.50 cm at the top. The continuous steel guide 15 is fixed to the track 12 and is 10 cm wide and 2.5 cm thick; the face that is directed towards the slot has a 4% taper, so as to mate with the external surface of the guiding roller when it is in vertical position.

A cylindrical spring 37 is fixed to the plate 29 in an upward region and, in a downward region, to a steel plate that is perforated and keyed on the pivot 33 so as to slide along it. The upper ring of the axial ball bearing 38 is fixed to said plate, whereas the lower ring of the bearing 38 is fixed to the rotating hollow cylindrical ring 36.

Each pair of guiding rollers 30 and 31 is fixed to the bar 29 so that each one can rotate freely and independently of the other due to the motion of the vehicle and to contact with the fixed guide 15, and so that the distance at the top between the two points where the two rollers make contact with the two guides that are fixed to the track is 9 cm when the two rollers enter the slot 14 of the track by at least 5 cm.

When the two guides that are fixed to the track are laid along a straight path, the guiding rollers of the two axles of the vehicle are aligned within the two fixed track guides, parallel to the wheels. The guiding rollers are appropriately forced to remain in perfect contact with the track guides by the pushing action of the spring 37, whose size must therefore be such as to apply a thrust that is suitable to contrast the tangent forces that occur, especially during curves, along the surface of contact between the fixed guide and the rotating roller and tend to make the roller exit from the slot.

The plate 29 can have, if required, more space for the springs, with a configuration shaped like an inverted U that protrudes above the bars 22 and 24.

In these conditions, during travel the guiding rollers, by rotating freely and in opposite directions due to the forced contact with the track guides, remain aligned and parallel to the fixed track guides; likewise, due to the described connection mechanisms, the wheels of the vehicle remain parallel to the track guides, maintaining a straight direction of travel.

The cylindrical spring 37 is provided so that it is compressed almost fully when the vehicle is loaded to maximum capacity and a tire is accidentally flat and therefore the distance of the bar 22 from the track surface 12 is minimal, and so that when the vehicle is unladen, and therefore in the conditions in which the bar 22 is at the maximum distance from the track surface, said spring is capable of applying to the rotating element 36, which can slide vertically on the fixed element 33, a sufficient thrusting action that is suitable to ensure contact between the guiding rollers and the fixed track guides.

A steel ring can be inserted in the tires to allow correct rolling of the wheels even in case of accidental deflation of a tire.

Since the distance of the two fixed track guides is always the same, and since the position of the guiding rollers with respect to the bars to which they are fixed does not vary during curves, the generatrices along which the guiding rollers make contact with the fixed metallic guides vary, and the distance between the new contact generatrices during curves is always smaller than the distance along straight routes.

The difference between the two distances is given by:

$$g' - g = (g - g/2) * (1 - \cos Wc)$$

This difference is greatest when the value of the radius of curvature of the track is smallest. When the value of R = 10 m, this difference is equal to 0.45 cm. The taper of the rotating elements 36, by sliding vertically on the fixed pivots 33, causes the guiding rollers 30, 31, under the thrust of the spring 37, to enter the slot by the extent required to re-establish contact between said rollers and the fixed track guides. In the case of R = 10 m, the guiding rollers must enter the slot by another 5.6 cm in order to re-establish contact with the track guides. The taper of the guiding rollers and of the contact surfaces of the fixed track guides causes the guiding rollers, when passing from curved-line motion to straight-line motion, to be pushed upward and to be returned into the position that they had during straight-line motion.

Furthermore, due to the vertical rigidity of the guiding mechanism, the spring 37 has the purpose of damping the vibrations and oscillations that occur during travel in the contact between the guiding rollers and the fixed track guides.

When it travels along a curve, the vehicle thus is arranged as shown in figure 7, since the guiding rollers, pushed by the action of the spring 37, remain inserted between the fixed track guides and produce the rotation of the wheels of the vehicle by virtue of the described connecting mechanism.

The guiding rollers that are fixed to the center of the bar 24 move by a distance "s" with respect to the direction of travel.

With reference to figure 17, it is noted that the line that connects the centers C1 and C2' lies parallel to the tangent of the curve whose radius is R, in the midpoint of the bar 27, and forms an angle equal to "Wc" with respect to the direction of travel of the vehicle. For the front axle of the vehicle, the following equation holds:

$$\sin Wc = (P/2 + b/2) : R$$

and for the rear axle:

$$\sin Wc = (P/2 - b/2) : R$$

where

    P = distance between the two axles of the vehicle;

b = distance of the centers C1-C2;
R = radius of curvature of the track axis;
s = shift of the center C2 to C2' with respect to the direction of travel of the vehicle due to the curvature of the fixed track guides.

The shift of C2 to C2', of D to D', and of E to E', is equal to:

$$s = b * \sin Wc$$

In order to be inscribed in the curve, the wheels of each axle must however be arranged parallel to the line that is tangent to the curve whose radius is R in the midpoint of said axle; therefore, the angle by which the wheels must rotate in order to be inscribed in a curve whose radius is R is "Wo" for both axles, and therefore sin Wo = P/2 / R .

Accordingly, since the shift of the endpoints D and E of the bars 20 and 21 is always "s", in order to achieve a rotation of the wheels with respect to the direction of travel that is equal to "Wo" instead of "Wc", the two bars 20 and 21 must have, for the front axle, a length "b1" that is greater than "b" and is given by:

$$b1 = s/\sin Wo$$

and, for the rear axle, a length "b1" that is shorter than "b" and is given by:

$$b1 = s/\sin Wo$$

However, to exactly inscribe the vehicle in the curve, the outer wheels of each axle must rotate by an angle that is smaller than "Wo" and the inner wheels must rotate by an angle that is greater than "Wo". More precisely, the outer wheel must rotate by an angle "We" that is given by:

$$\sin We = P/2 / (R+L' / 2)$$

and the inner wheel must turn through an angle "Wi" that is given by:

$$\sin Wi = P/2 / (R-L' / 2)$$

where L' is the distance between the two wheels of the axle.

In order to achieve angular correction with respect to the obtained common rotation of both wheels of the axle, which is equal to "Wo", a system has been devised that allows the distances A-D and B-E to increase or decrease so as to match variations in the shift "s", and therefore in "R", so that when "R" varies, the pivots that are fixed to the ends of the bar 24 move, by sliding in the appropriately provided slots formed at the ends of the bars 20 and 21, through a distance that is equal to "Xie" or "Xii" and is such as to cause a greater or smaller rotation of the bars, and therefore of the wheels, depending on whether the wheel is an outer one or an inner one. The bars 20 and 21 are connected, at their ends, to the bar 24 by means of two pivots 25 that can slide within the respective slots 26, which have the particular configuration shown in figures 14 and 16 and obtained as follows: when the vehicle travels in a straight line, the pivot that is fixed to the bar 24 is in contact with the bar 20 in the midpoint 0. When the center C2 moves to C2' over "s", the pivots 25 also move from D to D' and from E to E' over a same distance "s", and the two bars 20 and 21, and therefore the two wheels 11, rotate by an angle "Wo" that is given by sin Wo = s/b1.

To be exactly inscribed in the curve, the outer wheel must undergo a rotation "We" that, as mentioned, is equal to:

$$\sin We = P/2 / (R+L' / 2)$$

and the inner wheel must undergo a rotation "Wi" that is equal to:

$$\sin Wi = P/2 / (R-L' / 2)$$

Therefore, the points where the two bars make contact with the bar 24 must vary so that while the shift "s" remains the same, the distance "b1" is increased for the outer wheel by an amount equal to:

$$Xie = s / \sin Wie - b1$$

and the distance "b1" is reduced for the inner wheel by an amount equal to:

$$Xii = s / \sin Wii - b1$$

The Cartesian axis system Xi-Di is considered; in this system, the axis Xi coincides with the axis of the bars 20 and 21 and the origin O lies in the point where the pivot makes contact with the bars when nil shifts "s" occur, i.e., during straight-line travel, as shown in figures 14 and 16. The points of contact between the pivots that are fixed to the bar 24 and the bars 20 and 21 must move away from the axis Xi by an extent "di" when the length increases and decreases "Xi", which are functions of "R", vary, since the value of "s" for a given "R" must remain the same; said extent "di" is given by (b1 + Xi) * tan (We - Wo). The values of "di" thus determined must however be corrected by the extents of the shifts that affect the contact points along the axis that lies at right angles to the axes of the bars Xi and are due to the rotation of the bar 24, which is rigid and non-deformable, about the center C2. This rotation, which is obtained with the mechanism that will be described hereinafter, is necessary to obtain the required shifts Xi in D and E. For the front axle of the vehicle, the locus of the points of contact of the pivots fixed to the bar 24 with the two bars 20 and 21, when "s", and therefore "R", vary, is constituted by a curve whose points have the following ordinate values "di" for the various positive values of Xi and therefore in the case of an outer wheel:

$$di = (b1 + Xie) * \tan (We - Wo) + Xie * \tan (Wo - K)$$

where "K" is the fixed angle formed by the axis of the bar D-C2 with the line that lies parallel to the axis of the fixed bar A-B. For negative values of Xi, that is to say, in the case of an inner wheel, the following values are obtained:

$$di = (b1 + Xii) * \tan (Wi - Wo) - Xii * \tan (Wo - K).$$

For the rear axle of the vehicle, the following values of "di" are obtained as the values Xi vary, in a manner that is similar to the previous case: for positive values of Xi, one obtains:

$$di = (b1 + Xie) * \tan (We - Wo) + Xie * \tan (Wo + K)$$

and for negative values of Xi:

$$di = (b1 + Xii) * \tan (Wi - Wo) - Xii * \tan (Wo + K)$$

Therefore, the slots formed at the ends of the bars 20 and 21, with the configuration shown in figure 14 for the front axle 10 and the configuration shown in figure 16 for the rear axle 11, allow the wheel to which the bar is connected to rotate, as "R" varies, by the corresponding angle "We" when the connecting pivot moves in the slot so as to lengthen said bar, and by the corresponding angle "Wi" when the pivot moves inside the slot so as to shorten the bar.

The slots shown in figures 14 and 16 have been obtained by constructing them point by point, using the above indicated relations for the various values of "R".

However, in order to obtain the shift of the pivots within the slots over the desired distances Xi, a metal plate 40 is fixed below the bar 24; said plate has the profile shown in figure 14 for the front axle 10 and the profile shown in figure 16 for the rear axle 11, and both plates have the same cross-section, which is shown in figure 15.

Said plate is provided so that when the shift "s" of C2 to C2' varies, at the point C2 the presence of a pivot 41 that is supported by a fixed steel bar 42 rigidly connected to the bar 22 below the bar 27 causes a movement of the bar 24 that is equal to Yi and is capable of producing the desired shifts Xi of the pivots that are fixed to the bar 24 at D and E. The values of the movements "Yi", which are functions of "s", are given by:

$$Yi \ Xi * s / l/2$$

where
l = distance between the pivots A-B.

In order to make the bar 24 move and rotate in C2 when the shifts "s" of C2 to C2' occur, the pivot 42 supported by the bar that is fixed to the bar 22 must move by an extent that is equal to:

$$b - b * \cos Wc$$

The mechanism that allows the pivot in C2, which is supported by the fixed bar 41 rigidly connected to the bar 22 and shown in figures 10 and 11, to shift by the desired distance b - b * cos Wc when "s" varies is provided by connecting said pivot to the metallic bar 43, which is pivoted in the midpoint F to the metallic bar 27. The pivot 42 moves, along the telescopic guide formed in the end part of the fixed metallic bar that supports said pivot 42, by a distance equal to b - b * cos Wc, remains in this position due to the action of the two bars F - I and C1 - C2, and pushes the bar 24, by means of the welded metallic plate 40 that has the preset profile, so that said bar 24 moves to C2 over the distance "Yi" and therefore forces the pivots to shift to D and E over the distances + or - Xi within the slots 26 formed at the ends of the bars 20 and 21. The following tables list the values calculated with the above relations for the various values of the radius of curvature "R", starting from the minimum value of R = 7.50 m and after setting the following values:

P = distance between the two axes of the vehicle = 7.75 m
l = distance between the pivots A-B = 1.30 m
b = distance between the centers C1-C2 = 1.00 m
g = distance between the edges of the track guides = 9 cm
L' = axial distance between the two wheels = 1.80 m.

The following values are obtained for the front steering axle 10:

| R(m) | s(m) | Wc(°) | Wo(°) | We(°) | Wi(°) | Xi(cm) |
|---|---|---|---|---|---|---|
| 7.50 | 0.5833 | 35°41' | 31°06' | 27°28' | 35°57' | 13.551 |
| 10.00 | 0.4375 | 25°56' | 22°48' | 20°49' | 25°12' | 10.166 |
| 12.50 | 0.3500 | 20°29' | 18°03' | 16°48' | 19°30' | 8.130 |
| 15.00 | 0.2916 | 16°57' | 14°58' | 14°06' | 15°57' | 6.750 |
| 17.50 | 0.2500 | 14°28' | 12°47' | 12°09' | 13°29' | 5.814 |
| 20.00 | 0.2187 | 12°38' | 11°10' | 10°41' | 11°42' | 5.080 |
| 30.00 | 0.1458 | 8°23' | 7°25' | 7°12' | 7°39' | 3.368 |
| 50.00 | 0.0875 | 5°01' | 4°26' | 4°22' | 4°31' | 2.020 |
| 100.0 | 0.0437 | 2°30' | 2°13' | 2°12' | 2°14' | 0.783 |
| 200.0 | 0.0219 | 1°15' | 1°06' | 1°06' | 1°06' | 0.474 |

For the rear steering axle 11, the values obtained for the angles "Wo", "We", and "Wi" are identical to the previous case and are not listed; furthermore, one obtains:

| R(m) | s(m) | Wc(°) | b-bcosWc(cm) | Xi(cm) | Yi(cm) |
|---|---|---|---|---|---|
| 7.50 | 0.4500 | 26°44' | 10.69 | 10.45 | 7.23 |
| 10.00 | 0.3375 | 19°43' | 5.87 | 7.85 | 4.07 |
| 12.50 | 0.2700 | 15°39' | 3.71 | 6.27 | 2.61 |
| 15.00 | 0.2250 | 13°00' | 2.56 | 5.23 | 1.81 |
| 17.50 | 0.1928 | 11°07' | 1.87 | 4.46 | 1.32 |

(continued)

| R(m) | s(m) | Wc(°) | b-bcosWc(cm) | Xi(cm) | Yi(cm) |
|---|---|---|---|---|---|
| 20.00 | 0.1687 | 9°43' | 1.43 | 3.90 | 1.01 |
| 30.00 | 0.1125 | 6°27' | 0.63 | 2.62 | 0.45 |
| 50.00 | 0.0675 | 3°52' | 0.23 | 1.57 | 0.16 |
| 100.0 | 0.0337 | 1°56' | 0.06 | 0.58 | 0.03 |
| 200.0 | 0.0168 | 0°58' | 0.01 | 0.01 | 0.00 |

With the confinement guiding system described above, two unidirectional tracks can cross with any intersection angle, since the vehicles can transit safely with the mechanism described hereafter.

With reference to figures 20 and 21, the two slots 14 and the corresponding fixed track guides 15, by intersecting each other at right angles, form the intersection square 101-102-103-104. Two steel bars 50 and 51 that are 5 cm wide, 2 cm high, and 18 cm long are pivoted on the corners 101 and 103 by means of pivots that have a vertical axis; the edge of said bars on the slot side tapers by 4%, so as to be able to rotate on a perfectly horizontal plane. The two bars are kept in the position 101-104 and in the position 103-104 by two adapted torsion springs, which are welded respectively to the bars at 102 and at 103 coaxially to the two hinge rotation pivots, and by the abutments located at 102 and 104.

When the vehicle moves in the travel direction shown in figure 20, the bar that is pivoted at 103, which is arranged in position 103-104 due to the action of the torsion spring installed in the position 103, is made to rotate about the hinge 103 under the thrust of the guiding rollers. The bar thus assumes the position 103-102, and is accommodated in 102, where it is stopped so that the edge of the bar exactly mates with the outer surface of the guiding rollers, so that the distance between the inner edges with respect to the opposite guide is always such as to ensure contact of the guiding rollers. The bar 101-104 pivoted at 101 remains in the position 101-104 because it is held in this position by the torsion spring installed at 101. The vehicle can thus pass and the guiding rollers always have perfect contact with the track guides when passing the intersection.

Instead, when the vehicle is moving in the travel direction shown in figure 21, the bar that is pivoted at 101 and is kept in the position 101-104 by the action of the torsion spring installed at 101 is easily rotated, under the thrust of the guiding rollers, about the hinge installed at 101, reaches the position 101-102 and is accommodated at 102, where it is stopped so that the edge of the bar exactly mates with the outer surface of the guiding rollers and so that the distance between the inner edges with respect to the opposite guide is always such as to ensure contact with the guiding rollers. The bar that is pivoted at 103 remains in the position 103-104 because it is kept in this position by the torsion spring installed at 103. The vehicle can thus pass as in the preceding case.

The intersection crossing speed must be reduced appropriately, since the wheels of the vehicle, which have a diameter of 60 cm, must pass over the 9-cm gap that lies between the track guides of the track being crossed.

The intersection of two tracks roads is particularly useful for moving vehicles in yards and in service areas, whereas it is less useful for urban track networks for safety reasons.

The described rotations of the metallic bars about the hinges arranged in 101 and 103 can be performed by appropriate automatic electromechanical mechanisms that are remotely controlled and actuated when the vehicle approaches.

With the restrained guiding system described above, the traveling vehicle can pass from one unidirectional track to another unidirectional track with the following systems, which are preferably different for an exit from a track and for an entry into a track.

With reference to figure 25, merging a curved track that has a radius "R" into another straight track causes the track guides to be arranged as in figure 25, producing the tangency points 61 and 62. A steel element 63 is pivoted in the corner 61 with a pivot that has a vertical axis; said element 63 is shaped like a curved set square, as shown in the figure, and its edges are 2.5 cm thick and have a 4% taper. The square-shaped element 63 can rotate on a horizontal plane and is kept in the position 61-64 of figure 24 by the action of a torsion spring that is welded to said square-shaped element at 61 coaxially to the rotation pivot, as shown in figures 22 and 23, so that when the vehicle advances in the travel direction of figure 24, it can pass, since the guiding rollers always make perfect contact with the track guides. Instead, when the vehicle advances in the travel direction shown in figure 25, the square-shaped element 63 is easily rotated, under the thrust of the guiding rollers, about the hinge located at 61, reaches the position 61-62, and is accommodated and stopped at 62 so that the edge of the element, which is curved with the same radius of curvature as the merging track, perfectly mates with the outer surface of the guiding rollers. The vehicle can pass, since the guiding rollers make perfect contact with the guides. All the described rotations of the metallic bar about the hinge located at 61 can be performed by an appropriate electromechanical mechanism that is remotely controlled and actuated.

With reference to figure 26, the branching-off of the vehicle from a straight track into a track that is curved with a radius "R" causes the track guides to be arranged as in figure 26 and to be tangent at the points 65 and 67. Two metallic bars 71 and 72 are pivoted in the corners 65 and 67 by means of pivots that have a vertical axis; said bars are 2.5 cm thick, are appropriately coupled to a mechanism arranged below the reinforced-concrete slot, and have the configuration shown in figure 26. The curved bar 71, whose radius of curvature is equal to that of the branching-off track, and the straight bar 3-4 are retained in their respective positions 65-66 and 67-68 in the appropriately provided locking seats by two torsion springs that are installed at 65 and 67, so that when the vehicle travels in a straight direction it can pass, since the guiding rollers make perfect contact with the straight track guides.

Instead, when the vehicle must leave the straight track, it is necessary to actuate the mechanism that connects the two bars, making them protrude from their locking seats and causing them to rotate together so that they are arranged in the positions 65-69 and 67-70 shown in dashed lines in figure 26, where they encounter the appropriately provided locking seats. The vehicle can thus pass, as in the previous case, leaving the straight track. All the described rotations of the metallic bars about the hinges 56 and 67 can be easily performed by suitable electromechanical mechanisms with remote control and actuation.

In both merging and branching-off cases, these direction changes can occur even if both tracks are curved; in such cases it is in fact sufficient for the profiles of the movable metallic bars that allow the direction changes to have geometric profiles that mate with the curved geometrical configurations of the\fixed guides of the two curved tracks.

The limited transverse dimensions of the vehicles allow to have a minimum useful cross-section of the tunnels, along straight sections, that is 3.00 m wide and 2.55 m high; assuming the ordinary thicknesses of box-like structures made of reinforced concrete, said dimensions allow to have a minimum overall tunnel cross-section that is 3.50 m wide and 3.20 m high. The tracks (figure 3) are formed in tunnels that are built directly beneath the road surfaces of existing city streets, whose planimetric and altimetrical shape they can follow, since the vehicles are capable of being inscribed in tight-radius curves (minimum radius 8 m) and of coping with steep slopes (up to 8%), due to the high value of the grip coefficient between concrete and rubber.

The mechanisms for providing restrained guiding on the tracks furthermore allow not only the perfect inscription of the vehicles in tight-radius curves with differences in the rotations of the inner and outer wheels, but also allow switching from one track to another, so that it is possible to build, in the ground beneath city streets, true track networks constituted by a set of closed unidirectional circuits that are interconnected by link tracks that may have tight curvature radii and are perfectly tangent, in the points of contact, to the two unidirectional tracks of the two different circuits to be connected.

The connection between two circuits occurs by providing two portions of curved tunnels whose extension and curvature radii are a function of the existing and available spaces and always so that the vehicles can pass from one circuit to the other, complying with the circulation directions provided for in each circuit.

The connections between the various circuits mainly have service functions, since they must allow to shunt or transfer the vehicles at the beginning and at the end of daily service or during said service.

Each unidirectional circuit can have any geometric configuration and can run beneath the curbs of the two opposite sidewalks of a same street, if the roadway is wide enough (figure 6 bis), or on nearby parallel streets or even on different streets that are located and connected in any manner.

By way of practical example, a possible circuit is shown in the schematic plan of a part of the city of Palermo, shown in figure 27; said circuit runs from Piazzale De Gasperi to Piazza Giulio Cesare, and in the branch up to Piazza Castelnuovo the outbound and inbound tracks run beneath the curbs of the two opposite sidewalks of Viale Libertà and Viale Croce Rossa, whereas in the leg between Piazza Castelnuovo and Piazza Giulio Cesare the two unidirectional tracks are accommodated in Via Maqueda and Via Roma, which are parallel.

The presence of service networks, in the manner in which they are currently executed, is the only impediment to the construction of tunnels under road surfaces, especially at intersections. The small transverse dimensions of the tunnels and the possibility to perform planimetric and altimetrical changes of the tracks in small spaces allow, at road intersections and in all roads that require it, to set the elevation of the tunnels so as to allow the pipes that may be buried down to a depth of approximately 1.30 m (pipes for electricity, telephone, water, gas, etcetera) to pass above said tunnels and so as to allow drain trunk lines and large-diameter pipes, which can be buried at depths of more than 4.50 m, to pass below the tunnels.

Therefore, in such cases, the tunnels can be accommodated in the space that lies between approximately 1.30 m and 4.50 m of depth, beneath existing road surfaces (figures 5, 6, and 6 bis).

The expenditure required to transfer the pipes that unavoidably interfere with the construction of the tunnels and of the boarding stations, or rather to achieve a more efficient allocation of said pipes in the ground, despite being considerable, is in any case widely compensated by the enormous advantages that the devised transportation system achieves, even when some service networks need to be simultaneously fully reconstructed; the cost of this reconstruction in this case would become a useful expense for the modernization of the pipes and of road pavings. Said advantages are briefly summarized as follows:

-- Very low costs for the construction of tracks in tunnels, of boarding stations, and of the civil structures in general, because they can be produced with cut-and-cover methods with excavations that have a forced cross-section and because of the limited dimensions of said excavations. The estimated average cost per kilometer of one-way track in a tunnel, complete with the facilities and including the average costs for the hypothetical simultaneous new construction of the water, sewage, and gas networks and of the new pavings of roads and sidewalks, can be estimated in approximately eleven thousand million lire. For circuits in which the outbound and inbound tracks are located in the same street, this cost per kilometer of unidirectional track in a tunnel can instead be estimated at approximately eight thousand million lire.

-- Lack of noise, vibrations, and atmospheric pollution;

-- Easy elimination of the water of tunnels and boarding stations in the underlying drain trunk lines;

-- Short technical time requirements for construction;

-- Easy passage from tunnel sections to above-ground sections and vice versa, in view of the limited difference in level between street surfaces and the considerable longitudinal slopes that can be achieved by the vehicle tracks. This ease allows to construct, where possible, above-ground routes with their own tracks provided on the streets themselves, boarding stations with boarding platforms located at a level that is closer to that of the sidewalks, and most of all, in order to cope with existing obstacles such as waterways, railroads, etcetera, it allows to use the street surfaces of bridges, viaducts, and overpasses that have already been built for this purpose and on which the tracks reserved for the vehicles can be constructed.

-- The possibility to provide, beneath existing road surfaces, true underground urban track networks constituted by a set of unidirectional closed and interconnected circuits, each circuit having any geometrical configuration. A careful analysis of the structure of the city and of its streets and squares, open spaces, and most suitable and useful routes allows to identify the most convenient circuits that can be built to avoid same-level intersections and to achieve suitable connections between said circuits, bearing in mind that the transportation capacity of each circuit must be proportionate to the flow of the circuit itself and to the flows arising from the coverage of the municipal area provided by the various selected circuits. By way of example, three suitable connections between possible circuits are shown in the schematic plan of figure 27.

-- Flexibility of the system, since the interconnection of the tracks allows to program optimum and quick switching of the circulating vehicles among the various circuits, in order to provide adequate response to the different transportation demands that occur through the day in the various directions of mass transit and achieve a high coefficient of utilization of the vehicle pool.

Furthermore, by virtue of the suitable connections among the various circuits, where absolute traffic safety conditions occur, some vehicles, by passing from one circuit to another compatible one, might cover particular mixed routes that comply with specific transit requirements of users, as occurs for public surface transportation.

-- The possibility of connecting, in the course of time, the entire city area by proceeding either with circuits that affect the entire municipal area or with city area sections provided with circuits that are limited to the districts,into which the city area can be divided and which be subsequently connected, in any case providing a transportation system that is integrated, comfortable, cheap, flexible, expandable, safe, and reliable, and furthermore leaving road spaces free for other uses.

-- The possibility of concentrating the facilities meant for the maintenance and storage of all the vehicles in a single equipped area. The same-level intersection between two tracks allowed by the restrained guiding mechanisms makes it easier to move the vehicles in service areas.

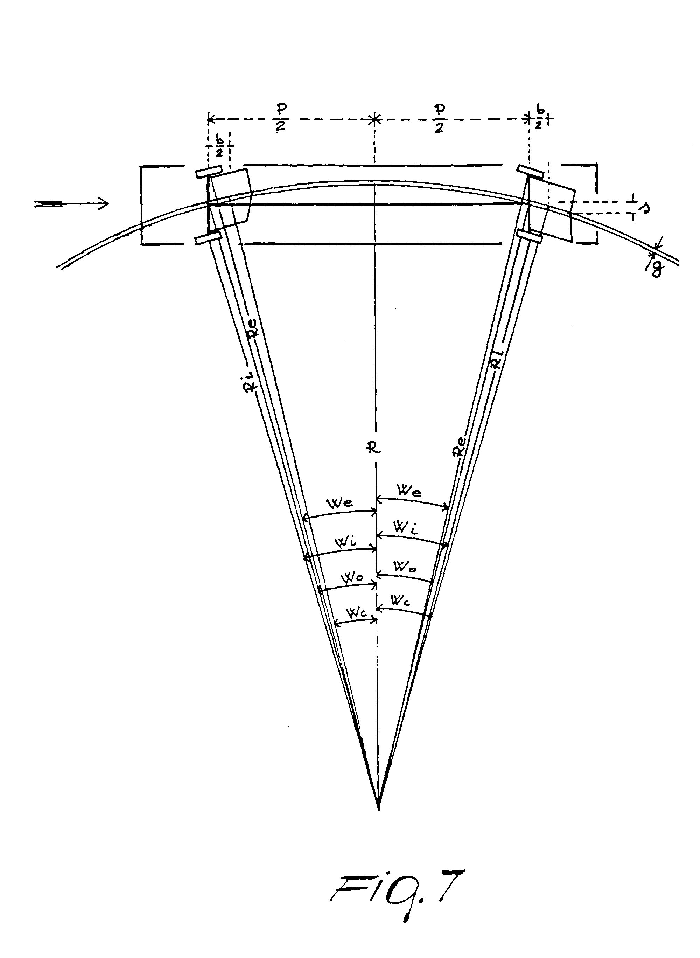

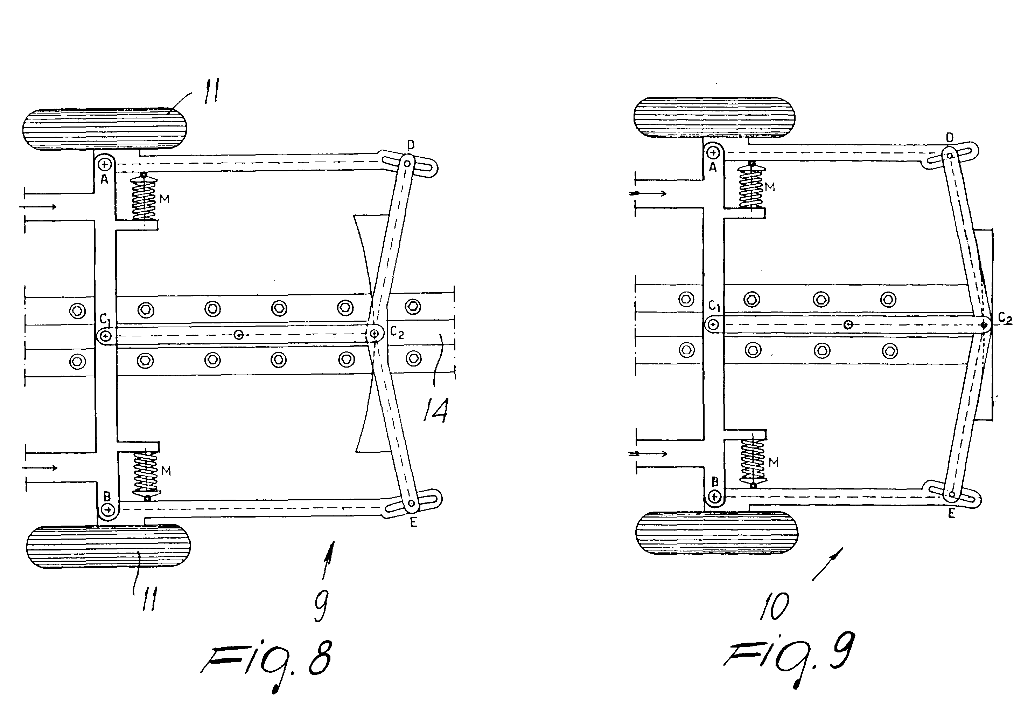

-- Modest size of the boarding stations, which can be built beneath sidewalks and existing adjacent free urban spaces (figure 4). If the sidewalks are not wide enough and there are no adjacent urban open spaces, the missing open space required to build the boarding station can be found beneath the street itself, by performing a sufficient planimetric shift of the track towards the centerline of the street (figure 6) or, if located in the vicinity of a large intersection, below the surface of the street that lies transversely to the street in which the tunnel is built. The width of the access ways and platforms of each boarding station is proportionate to the flow of passengers that is expected for the station, whereas the lengths of the platforms and therefore of the stations of a same circuit must be proportionate to the composition of the trains that is planned for said circuit as a function of the corresponding transportation capacity. Therefore, for trains constituted by a single vehicle (possible cases of secondary circuits), the platforms are approximately 14.00 m wide, whereas for trains constituted by two and three vehicles they are approximately 25.00 m and 36.00 m wide respectively.

-- Easy access to the vehicles, in view of the limited difference in level between city streets and the passenger boarding level, with the consequent possibility of providing access ways for disabled citizens.

-- The possibility of ventilating the boarding stations and, partly, the tunnels themselves directly from outside, since it is easily possible to provide openings of various kinds that are appropriately and variously protected externally.

-- The possibility ox providing sunlight to the boarding stations and, partly, to said tunnels by inserting transparent materials, appropriately provided so as to also constitute pleasant urban furnishings, in the covering.

-- Low management costs, in view of its particular characteristics, of the organization and uniformity of the system, especially if it is optionally automated, with circulation of the vehicles without a driver on board and with computerized control.

TRANSPORTATION CAPACITY OF THE SYSTEM

Considering the following data:

-- length of a single vehicle: 11.00 m
-- distance between the two axles: 7.75 m
-- seats in one vehicle: 16
-- standing room capacity in a vehicle (up to 6 passengers/sq m): 110
-- maximum acceleration: 1.2 m/sec$^2$
-- maximum deceleration: 1.2 m/sec$^2$
-- distance between two boarding stations: 300 m
-- maximum speed of the train: 60 km/h
-- travel time between two stations: 32 sec
-- stopping time in a station and pause: 25 sec,

for each circuit, the maximum hourly capacity "Q", taken as the number of places offered in one hour that pass through a station, as a function of the planned composition of the trains that circulate in said circuit, is:

-- for trains constituted by a single vehicle:
   Q = 126 passengers * 3600 sec / 60 sec = 7500 passengers/hour;

-- for trains constituted by two vehicles:
   Q = 252 passengers * 3600 sec / 60 sec = 15100 passengers/hour;

-- for trains constituted by three vehicles:
   Q = 378 passengers * 3600 sec / 60 sec = 22600 passengers/hour.

COMMERCIAL SPEED

The various circuits can have different commercial speeds, since said speed is a function of the number of boarding stations provided and of the corresponding mutual distances; the fewer the stations, the higher the speeds, and vice versa, so that one or the other of these parameters can be privileged for each circuit, according to the requirements. In the case of the circuit shown in the plan of figure 27, if one considers the above listed data and that there are 18 boarding stations along the outbound path, two of these stations being terminals, the travel time between the two terminal stations, which are 5200 m apart, is 16.30 minutes and the commercial speed is 19.10 km/h. If instead one considers 13 boarding stations along the same route, the travel time between the two terminal stations, which are 5200 m apart, is in this case 13.00 minutes and the commercial speed is 24.00 km/h, whereas if there are 8 boarding stations the travel time is 09.80 minutes and the commercial speed is 31.80 km/h.

In practice it has been shown that the invention achieves the intended aim and objects.

The system according to the invention is susceptible of numerous modifications and variations, all of which are within the scope of the inventive concept; all the details may furthermore be replaced with technically equivalent elements.

The materials employed, as well as the dimensions, may of course be any according to the requirements and according to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. Confinement guiding device, particularly for vehicles for the urban transportation of passengers, comprising: a steering mechanism including a quadrilateral formed by sides (20, 21, 22, 24) mutually hinged at articulation points thereof (A, D, B, E), with a first one (22) of said sides being fixed to the chassis of the vehicle and two further sides (20, 21) adjacent to the first one and opposite to each other, bearing each a respective wheel (11) of the vehicle (1); and guiding elements (30, 31), connected with the first side (22) of the quadrilateral, and with a fourth side (24) opposite thereto that are adapted to engage a guide (14) that is formed in the track,**characterized in that** it further comprises articulation means (25, 26) provided between at least two of said further two sides and fourth side (20, 21, 24), so that the fourth side (24) of the quadrilateral is articulated at both ends thereof to said two further sides (20, 21) bearing the wheels (11), said articulation means (25, 26) being adapted to allow the distance (A-D, B-E) between two adjacent ones of said articulation points (A, D, B, E) located on the two further sides (20, 21) to either increase or decrease during steering, the length of said two further sides (20, 21) bearing the wheels (11) being thereby variable so as to provide a differential rotation of the vehicle wheel (11) that lies on the inside of the curve and of the vehicle wheel (11) that lies on the outside of the curve in order to allow perfect inscription of said vehicle (1) in narrow curves and intersections of travelling circuits of closed or interconnected configurations.

2. Device according to claim 1, characterized in that said first fixed side is formed by a first fixed bar (22) that is rigidly connected the chassis of the vehicle (1), said two further sides are formed by lateral bars (20, 21) which are rigidly connected at ends thereof respectively to the inner wheel (11) and to the outer wheel (11) of said vehicle (1) and pivoted to said first fixed bar (22) through first vertical pivots (23) so as to rotate on a horizontal plane together with the two wheels (11), the fourth side (24) is formed by a fourth transverse bar (24) to which the free ends of said lateral bars (20, 21) are connected through said second vertical pivots (25) adapted to slide within appropriately provided shaped slots (26) that are formed at the free ends of said lateral bars (20, 21), said second vertical pivots (25) and said slots (26) forming said articulation means for increasing or decreasing the distance (A-D, B-E) between two adjacent quadrilateral articulation points (A, D, B, E);
and in that it further comprises:
a central bar (27) for mutually connecting said first fixed bar (22) and said fourth transverse bar (24), at respective centerline points thereof, through third vertical pivots (28, 29) that constitute hinges allowing rotation on a horizontal plane, two of said guiding elements (30, 31) being fixed to the center of each one of said fixed (22) and transverse (24) bars, said guiding elements (30, 31) being independent and mutually spaced; a fixed longitudinal bar (41) that is rigidly connected to said first fixed bar (22), said transverse bar (24) comprising a contoured profile (40) that is suitable to guide an end of said fixed longitudinal bar (41); and an oscillating bar (43) having one end that is pivoted in a median point of said central bar (27) and the other end that is pivoted (42) at said end of said longitudinal fixed bar (41) guided by said contoured profile (40), so as to actuate the rotation of said transverse bar (24) and therefore of said lateral bars (20, 21), guided by said slots (26), for a differential rotation of said inner and outer wheels (11), respectively, about their vertical axis.

3. Guiding device according to claims 1 or 2, characterized in that two springs (32) act on said lateral bars (20, 21) by contrast against said fixed bar (22), said springs (32) being sized so that the guiding mechanism, which is rigid and fixed on the vertical plane, offers appropriate resistance to variations in the configuration of the articulated quadrilateral on the horizontal plane, so as to produce self-centering of said guiding elements (30, 31) within track guides (15) during straight-line travel.

4. Guiding device according to one or more of claims 1-3, characterized in that said guiding elements are constituted by conical guiding rollers (30, 31).

5. Guiding device according to claim 4, characterized in that each guiding roller (30, 31) comprises: a solid cylindrical element (33), which is rigidly welded to a supporting plate (29) that is associated with said fixed (22) or transverse (24) bar; a bushing (34) with ball bearings, to allow the vertical sliding of the entire rotating part of the guiding roller (30, 31); roller bearings (35) with internal rings that are fixed to said bushing (34) and external rings that are fixed to a hollow element (36) to allow the rotation of said hollow element (36) about said bearings (35) and therefore about said solid cylindrical element (33); said hollow element (36) having a circular cross-section, being fixed to the external rings of said bearings (35), and being able to rotate freely about said fixed solid cylindrical element (33) with a cylindrical internal surface and a conical external surface that is identical to that of the contact edge of a continuous metallic guide (15) that is fixed to the track and in which the edge on the guide side is inclined so as to mate with the outer surface of said guiding roller (30, 31) when it is in vertical position; a cylindrical spring (37), which is rigidly coupled to said supporting plate (29) in an upward region and is fixed, in a downward region, to another sliding plate (39) to which the upper ring of an axial ball bearing (38) is fixed, the lower ring of said axial ball bearing (38) rotating rigidly with said hollow element (36).

6. Confinement guiding device according to claim 1, characterized in that it is applied both to the front steering axle (10) and to the rear steering axle (9) of a vehicle (1).

7. Confinement guiding device according to claim 1, characterized in that said guide comprises a slot (14) that has two fixed guides (15) along a track axis; mechanical means (50, 51, 63, 71, 72) for the same-level intersection of two tracks and for switching from one straight track to another curved one and vice versa; said fixed guides (15) being adapted to accommodate at least one of said guiding elements (30, 31) that is rigidly coupled to each steering axle (9, 10) of a said vehicle (1).

8. System for the urban transportation of passengers, comprising electrically-propelled vehicles that have a reduced transverse cross-section, are mounted on wheels fitted with tires, and have a steering system that is confined to specifically provided tracks,**characterized in that** the vehicles are provided with a confinement guiding device as set forth in any of the above claims.

9. System according to claim 8, characterized in that said tracks are constituted by a set of unidirectional closed and/ or interconnected circuits which can be formed at ground level and/or in tunnels built directly beneath the road surfaces of existing streets.

10. Vehicle, particularly for urban transportation systems, characterized in that it is electrically-propelled, has a reduced transverse cross-section, has wheels (11) fitted with tires, and has a confinement guiding device as set forth in any of the claims 1-7 that is confined to specifically provided tracks (14, 15), said vehicle (1) being divided into compartments (2, 3, 4) that are not mutually connected; the accommodation for the wheels (11), the axles (9, 10), and the electric motors being provided in the space between the track surface and two oppositely arranged rows of seats (6).

**Patentansprüche**

1. Zwangsführungseinrichtung, insbesondere für Fahrzeuge für den innerstädtischen Transport von Passagieren, umfassend einen Lenkmechanismus mit einem Gelenkviereck, das aus Seiten (20, 21, 22, 24) gebildet wird, die an Gelenkpunkten (A, D, B, E) derselben gelenkig miteinander verbunden sind, wobei eine erste (22) dieser Seiten an dem Chassis des Fahrzeugs befestigt ist und zwei weitere Seiten (20, 21), die benachbart zur ersten und einander gegenüberliegend sind, jeweils ein Rad (11) des Fahrzeugs (1) tragen, und mit der ersten Seite (22) des Gelenkvierecks und mit einer dieser gegenüberliegenden vierten Seite (24) verbundene Führungselemente (30, 31), die in eine in der Bahn ausgebildete Führung (14) eingreifen können, dadurch **gekennzeichnet**, daß die Zwangsführungseinrichtung ferner Gelenkvorrichtungen (25, 26) hat, die zwischen mindestens zwei der weiteren zwei Seiten und der vierten Seite (20, 21, 24) so angeordnet sind, daß die vierte Seite (24) des Gelenkvierecks an ihren beiden Enden mit den zwei weiteren Seiten (20, 21), welche die Räder (11) tragen, gelenkig verbunden ist, wobei die Gelenkvorrichtungen (25, 26) geeignet sind, den Abstand (A-D, B-E) zwischen zwei benachbarten und an den zwei weiteren Seiten (20, 21) angeordneten Gelenkpunkten (A, D, B, E) während des Lenkens entweder zu vergrößern oder zu verringern und wobei die Länge der zwei weiteren Seiten (20, 21), welche die Räder (11) tragen, derart einstellbar ist, daß eine unterschiedliche Drehung des auf der Kurveninnenseite und des auf der Kurvenaußenseite liegenden Fahrzeugrades (11) ermöglicht wird, um einen perfekten Lauf des Fahrzeuges (1) in engen Kurven und Kreuzungen von Fahrkreisen geschlossener oder untereinander verbundener Konfigurationen zu ermöglichen.

2. Einrichtung nach Anspruch 1, dadurch **gekennzeichnet**, daß die erste feststehende Seite aus einer ersten feststehenden Stange (22) gebildet wird, die starr mit dem Chassis des Fahrzeugs (1) verbunden ist, und die zwei weiteren Seiten aus Seitenstangen (20, 21) gebildet werden, die an deren Enden jeweils starr mit dem inneren Rad (11) und mit dem äußeren Rad (11) des Fahrzeugs (1) verbunden und über erste vertikale Drehzapfen (23) schwenkbar an der ersten feststehenden Stange (22) gelagert sind, um zusammen mit den beiden Rädern (11) in einer horizontalen Ebene schwenken zu können, daß die vierte Seite (24) aus einer vierten quergerichteten Stange (24) gebildet wird, mit der die freien Enden der Seitenstangen (20, 21) über die zweiten vertikalen Drehzapfen (25) verbunden sind, die in geeignet geformten Schlitzen (26) an den freien Enden der Seitenstangen (20, 21) gleiten können, wobei die zweiten vertikalen Drehzapfen (25) und die Schlitze (26) die Gelenkvorrichtungen zum Vergrößern oder Verringern des Abstandes (A-D, B-E) zwischen zwei benachbarten Gelenkpunkten (A, D, B, E) des Gelenkvierecks bilden;

und daß sie ferner umfaßt.

eine zentrale Stange (27) zum Verbinden der ersten feststehenden Stange (22) mit der vierten quergerichteten Stange (24) an ihren jeweiligen Längsmittelpunkten über dritte vertikale Drehzapfen (28, 29), welche Gelenke bilden, die eine Drehung in einer horizontalen Ebene erlauben, wobei zwei der Führungselemente (30, 31) im Zentrum der feststehenden (22) und der quergerichteten Stange (24) angeordnet sind und die Führungselemente (30, 31) unabhängig und voneinander beabstandet sind; eine feststehende längsgerichtete Stange (41), die starr mit der ersten feststehenden Stange (22) verbunden ist, wobei die Querstange (24) ein Profil (40) hat, das geeignet ist, ein Ende der feststehenden längsgerichteten Stange (41) zu führen; und eine Schwingstange (43), deren eines Ende in einem mittleren Punkt der zentralen Stange (27) angelenkt ist, während das andere Ende an dem Ende der feststehenden längsgerichteten Stange (41) angelenkt ist (42), die an dem Profil (40) geführt ist, um so die Drehung der von den Schlitzen (26) geführten Querstange (24) und daher auch der Seitenstangen (20, 21) zu bewirken, um so eine unterschiedliche Drehung der inneren und äußeren Räder (11) um ihre vertikalen Achsen zu erreichen.

3. Führungseinrichtung nach Anspruch 1 oder 2, dadurch **gekennzeichnet**, daß zwei Federn (32) auf die Seitenstangen (20, 21) durch Abstützung an der feststehenden Stange (22) einwirken, wobei die Federn (32) so bemessen sind, daß der Führungsmechanismus, der starr und in der vertikalen Ebene angeordnet ist, einen geeigneten Widerstand gegen Änderungen der Konfiguration des Gelenkvierecks in der Horizontalebene bietet, um so eine Selbstzentrierung der Führungselemente (30, 31) innerhalb von Führungsbahnen (15) während des Geradeauslaufes zu erzeugen.

4. Führungseinrichtung nach einem oder mehreren der Ansprüche 1 bis 3, dadurch **gekennzeichnet**, daß die Führungselemente aus konischen Führungsrollen bestehen (30, 31).

5. Führungseinrichtung nach Anspruch 4, dadurch **gekennzeichnet**, daß jede Führungsrolle (30, 31) umfaßt: ein massives zylindrisches Element (33), das starr an einer Trägerplatte (29) angeschweißt ist, die mit der feststehenden (22) oder der quergerichteten Stange (24) verbunden ist; eine Buchse (34) mit Kugellagern, um eine vertikale Gleitbewegung des gesamten drehenden Teils der Führungsrolle (30, 31) zu ermöglichen; Rollenlager (35) mit Innenringen, die an der Buchse (34) befestigt sind, und Außenringen, die an einem hohlen Element (36) befestigt sind, um eine Drehung des hohlen Elementes (36) um die Lager (35) und damit um das massive zylindrische Element (33) zu ermöglichen, wobei das hohle Element (36) einen kreisförmigen Querschnitt hat, an den Außenringen der Lager (35) befestigt ist, sich frei um das feststehende massive zylindrische Element (33) drehen kann und eine zylindrische Innenfläche und eine konische Außenfläche hat, die identisch mit der Kontaktfläche einer kontinuierlichen metallischen Führung (15) ist, die an der Bahn befestigt ist und in welcher der Rand an der Führungsseite so geneigt ist, daß er zu der Außenfläche der Führungsrolle (30, 31) paßt, wenn sie in ihrer vertikalen Position ist; eine zylindrische Feder (37), die in einem oberen Bereich starr mit der Trägerplatte (29) gekoppelt und in einem unteren Bereich an einer anderen Gleitplatte (39) befestigt ist, an welcher der obere Ring eines Axialkugellagers (38) befestigt ist, während der untere Ring des Axialkugellagers (38) sich starr mit dem hohlen Element (36) dreht.

6. Zwangsführungseinrichtung nach Anspruch 1, dadurch **gekennzeichnet**, daß sie sowohl an der vorderen Lenkachse (10) als auch an der rückwärtigen Lenkachse (9) eines Fahrzeugs (1) angeordnet ist.

7. Zwangsführungseinrichtung nach Anspruch 1, dadurch **gekennzeichnet**, daß die Führung einen Schlitz (14) aufweist, der zwei feststehende Führungen (15) entlang einer Bahnachse hat, sowie mechanische Mittel (50, 51, 63, 71, 72) für die niveaugleiche Kreuzung zweier Bahnen und zum Umschalten von einer geraden Bahn auf eine andere gekrümmte Bahn oder vice versa, wobei die feststehenden Führungen (15) zur Aufnahme mindestens eines der Führungselemente (30, 31) geeignet sind, das starr mit jeder Lenkachse (9, 10) des Fahrzeuges (1) verbunden ist.

8. System für den innerstädtischen Transport von Passagieren, das elektrisch angetriebene Fahrzeuge umfaßt, die einen verringerten Querschnitt haben, auf mit Reifen versehenen Rädern laufen und ein Lenksystem haben, das auf speziell vorgesehene Bahnen beschränkt ist, dadurch **gekennzeichnet**, daß die Fahrzeuge eine Zwangsführungseinrichtung gemäß einem der obenstehenden Ansprüchen haben.

9. System nach Anspruch 8, dadurch **gekennzeichnet**, daß die Bahnen aus einem Satz unidirektionaler geschlossener und/oder untereinander verbundener Kreise bestehen, die auf Bodenhöhe und/oder in Tunneln gebildet werden können, die direkt unterhalb der Straßenoberfläche bereits existierender Straßen gebaut sind.

10. Fahrzeug, insbesondere für innerstädtische Transportsysteme, dadurch **gekennzeichnet**, daß es elektrisch angetrieben ist, einen verringerten Querschnitt, mit Reifen versehene Räder (11) und eine, in einem der Ansprüche 1 bis 7 dargestellte Zwangsführungseinrichtung hat, die auf spezifische Bahnen (14, 15) beschränkt ist, wobei das Fahrzeug (1) in Abteile (2, 3, 4) unterteilt ist, die nicht miteinander in Verbindung stehen und wobei die Räder (11), die Achsen (9, 10) und die elektrischen Motoren in dem Raum zwischen der Bahnoberfläche und zwei einander gegenüber angeordneten Reihen von Sitzen (6) untergebracht sind.

## Revendications

1. Dispositif de guidage de confinement, en particulier pour des véhicules destinés au transport urbain de passagers, comportant : un mécanisme de direction comportant un quadrilatère formé par des côtés (20, 21, 22, 24) articulés mutuellement au niveau de points d'articulation de ceux-ci (A, D, B, E), un premier (22) desdits côtés étant fixé sur le châssis du véhicule et deux autres côtés (20,21) adjacents au premier côté et opposés l'un à l'autre supportant chacun une roue respective (11) du véhicule (1), et des éléments de guidage (30, 31) reliés au premier côté (22) du quadrilatère et au quatrième côté (24) opposé à celui-ci, qui sont adaptés pour venir en prise avec un guide (14) qui est formé dans la voie, caractérisé en ce qu'il comporte en outre des moyens d'articulation (25, 26) agencés entre au moins deux desdits deux autres côtés et quatrième côté (20, 21, 24), de sorte que le quatrième côté (24) du quadrilatère est articulé à ses deux extrémités sur lesdits deux autres côtés (20, 21) supportant les roues (11), lesdits moyens d'articulation (25, 26) étant adaptés pour permettre que la distance (A-D, B-E) entre deux points adjacents desdits points d'articulation (A, D, B, E) situés sur les deux autres côtés (20, 21), augmente ou diminue pendant un virage, la longueur desdits deux autres côtés (20, 21) supportant les roues (11) étant ainsi variable de manière à fournir une rotation différentielle de la roue du véhicule (11) qui se trouve sur l'intérieur de la courbe et de la roue du véhicule (11) qui se trouve sur l'extérieur de la courbe afin de permettre une inscription parfaite dudit véhicule (1) dans des courbes étroites et des intersections de circuits de déplacement ayant des configurations fermées ou interconnectées.

2. Dispositif selon la revendication 1, caractérisé en ce que ledit premier côté fixé est formé par une première barre fixe (22) qui est reliée rigidement au châssis du véhicule (1) lesdits deux autres côtés sont formés par des barres latérales (20, 21) qui sont reliées rigidement à leurs extrémités à la roue intérieure (11) et à la roue extérieure (11) dudit véhicule (1) et pivotent sur ladite première barre fixe (22) par l'intermédiaire de premiers pivots verticaux (23) de manière à tourner dans un plan horizontal de concert avec les deux roues (11), le quatrième côté (24) étant formé par une quatrième barre transversale (24) à laquelle les extrémités libres desdites barres latérales (20, 21) sont connectées par l'intermédiaire de seconds pivots verticaux (25) adaptés pour coulisser dans des encoches ayant une forme fournie de manière appropriée (26) qui sont formées aux extrémités libres desdites barres latérales (20, 21), lesdits seconds pivots verticaux (25) et lesdites encoches (26) formant lesdits moyens d'articulation pour augmenter ou diminuer la distance (A-D, B-E) entre deux points d'articulation adjacents du quadrilatère (A, D, B, E),

et en ce qu'il comporte en outre :

une barre centrale (27) destinée à relier mutuellement ladite première barre fixe (22) et ladite quatrième barre transversale (24), au niveau de points centraux respectivement de celles-ci, par l'intermédiaire de troisièmes pivots verticaux (28, 29) qui constituent des articulations permettant la rotation dans un plan horizontal, deux desdits éléments de guidage étant fixés au centre de chacune desdites barres fixe (22) et transversale (24), lesdits éléments de guidage étant indépendants et mutuellement espacés, une barre longitudinale fixe (41) qui est reliée rigidement à ladite première barre fixe (22), ladite barre transversale (24) ayant un profil façonné qui est adapté pour guider une extrémité de ladite barre longitudinale fixe (41), et une barre oscillante ayant une première extrémité qui pivote autour d'un point médian de ladite barre centrale (27) et l'autre extrémité qui pivote (42) au niveau de ladite extrémité de ladite barre longitudinale fixe (41) guidée par ledit profil façonné (40) de manière à actionner la rotation de ladite barre transversale (24) et par conséquent desdites barres latérales (20, 21), guidées par lesdites encoches (26), pour avoir une rotation différentielle desdites roues intérieures et extérieures (11), respectivement, autour de leur axe vertical.

3. Dispositif de guidage selon la revendication 1 ou 2, caractérisé en ce que deux ressorts (32) agissent sur lesdites barres latérales (20, 21) par opposition contre ladite barre fixe (22), lesdits ressorts (32) étant dimensionnés de telle sorte que le mécanisme de guidage, qui est rigide et fixe dans le plan vertical, offre une résistance appropriée aux variations de la configuration du quadrilatère articulé dans le plan horizontal, de manière à produire un auto-centrage desdits éléments de guidage (30, 31) à l'intérieur des guides de voie (15) pendant un trajet en ligne droite.

4. Dispositif de guidage selon l'une ou plusieurs des revendications 1 à 3, caractérisé en ce que lesdits éléments de guidage sont constitués par des rouleaux de guidage coniques (30, 31).

5. Dispositif de guidage selon la revendication 4, caractérisé en ce que chaque rouleau de guidage comporte : un élément cylindrique plein (33), qui est soudé rigidement à une plaque de support (29) qui est associée à ladite barre fixe (22) ou barre transversale (24), un manchon (34) ayant des roulements à bille, pour permettre le coulissement vertical de toute la partie tournante du rouleau de guidage (30, 31) ; des roulements à rouleaux (35) ayant des bagues intérieures qui sont fixées audit manchon (34) et des bagues extérieures qui sont fixées à un élément creux (36) pour permettre la rotation dudit élément creux (36) autour desdits paliers, et par conséquent autour dudit élément cylindrique plein (33) ; ledit élément creux (36) ayant une section transversale circulaire, et étant fixé sur les bagues extérieures desdits roulements (35), et pouvant tourner librement autour dudit élément cylindrique plein fixe (33) avec une surface interne cylindrique et une surface externe conique qui est identique à celle du bord de contact d'un guide métallique continu (15) qui est fixé à la voie et dans lequel le bord situé du côté du guide est incliné de manière à être apparié avec la surface extérieure dudit rouleau de guidage (30, 31) lorsqu'il est en position verticale, un ressort cylindrique (37) qui est relié rigidement à ladite plaque de support (29) dans une zone dirigée vers le haut et est fixé, dans une zone dirigée vers le bas, à une autre plaque de coulissement, à laquelle est fixée la bague supérieure d'un roulement à billes axial (38), la bague inférieure dudit roulement à billes axial (38) tournant de manière rigide avec ledit élément creux (36).

6. Dispositif de guidage de confinement selon la revendication 1, caractérisé en ce qu'il est appliqué à la fois à l'essieu de direction avant (10) et à l'essieu de direction arrière (9) d'un véhicule (1).

7. Dispositif de guidage de confinement selon la revendication 1, caractérisé en ce que ledit guide comporte une encoche (14) qui a deux guides fixes (15) le long d'un axe de voie, des moyens mécaniques (50, 51, 63, 71, 72) pour l'intersection au même niveau de deux voies et pour commuter depuis une voie en ligne droite vers une autre incurvée et vice-versa, lesdits guides fixes étant adaptés pour recevoir au moins un desdits éléments de guidage (30, 31) qui est couplé rigidement à chaque essieu de direction (9, 10) dudit véhicule (1).

8. Système pour le transport urbain de passagers, comportant des véhicules à propulsion électrique qui ont une section transversale réduite, sont montés sur des roues munies de pneumatiques, et ont un système de direction qui est confiné à des voies prévues de manière spécifique, caractérisé en ce que les véhicules sont munis d'un dispositif de guidage de confinement selon l'une quelconque des revendications précédentes.

9. Système selon la revendication 8, caractérisé en ce que lesdites voies sont constituées par un ensemble de circuits fermés et/ou interconnectés unidirectionnels qui peuvent être formés au niveau du sol et/ou dans des tunnels construits directement en dessous des surfaces de voie de rues existantes.

10. Véhicule, en particulier pour des systèmes de transport urbain, caractérisé en ce qu'il est propulsé électriquement, a une section transversale réduite, a des roues (11) munies de pneumatiques, et a un dispositif de guidage de confinement selon l'une quelconque des revendications 1 à 7, qui est confiné à des voies agencées de manière spécifique (14, 15), ledit véhicule (1) étant divisé en compartiments (2, 3, 4) qui ne sont pas reliés mutuellement, la réception des roues (11), les essieux (9, 10), et les moteurs électriques étant agencés dans l'espace existant entre la surface de la voie et deux rangées de sièges disposées de manière opposée (6).

Fig.1

Fig.2

Fig. 3

13

Fig. 4

Fig. 5

Fig. 6

Fig. 6 bis

Fig.7

Fig. 8

Fig. 9

Fig.11

Fig.10

*Fig. 12*

*Fig. 13*

Fig. 14

Fig. 15

Fig.16

FiG. 17

Fig. 18

Fig.19

Fig.20

Fig.21

Fig. 22

Fig. 23

Fig. 24

Fig. 25

Fig. 26

Fig.27